# EUROPEAN PATENT APPLICATION

(11) **EP 2 552 012 A1**
(43) Date of publication of application: **30.01.2013**
(21) Application number: 11175582.3
(22) Date of filing: 27.07.2011
(51) Int. Cl.: H02P 9/02, H02P 29/00, F03D 9/00

(54) **Reduction of noise and vibrations of an electromechanical transducer by using a modified stator coil drive signal comprising harmonic components**

(71) Applicant: Siemens Aktiengesellschaft, 80333 München (DE)
(72) Inventor: Heng, Deng, 7330 Brande (DK)

(57) **Abstract**

Reduction of noise and vibrations of an electromechanical transducer, in particular an electric generator, comprising permanent magnets, for a wind turbine, by using a modified stator coil drive signal comprising harmonic components.
It is described a method for controlling the operation of an electromechanical transducer which exhibits a harmonic operational behavior which is given by electric and/or mechanic oscillations having frequency components being different from a fundamental frequency being assigned to a fundamental operational behavior of the electromechanical transducer. The described method comprises (a) observing the strength of a physical quantity being characteristic for the harmonic operational behavior, (b) providing an observation signal (Tac, Fac) being indicative for the observed strength of the physical quantity, (c) comparing the provided observation signal (Tac, Fac) with a reference signal (Tacref, Facref) for the strength of the harmonic operational behavior, (d) determining a harmonic control signal (Idacref, Iqacref) in response to the observation signal (Tac, Fac) and in further response to the reference signal (Tacref, Facref), (e) generating a modified drive signal (Vd, Vq) based on the determined harmonic control signal (Idacref, Iqacref), and (f) supplying the generated modified drive signal (Vd, Vq) to electromagnetic coils of a stator of the electromechanical transducer. It is further described a corresponding control system (200, 300) and a computer program which are adapted for carrying out and/or for controlling the described method.

## Description

### Field of invention

The present invention relates to the technical field of operating an electromechanical transducer having a stator and a rotor. In particular, the present invention relates to a method for controlling the operation of such an electromechanical transducer, which in particular is electric generator for a wind turbine. Further, the present invention relates to a corresponding control system and to a computer program for controlling the operation of an electromechanical transducer.

### Art Background

Electromechanical transducers are machines, which convert electrical energy into mechanical energy or vice versa. An electric motor is a widely used electromechanical transducer that converts electrical energy into mechanical energy using magnetic field linkage. An electric generator is an electromechanical transducer that converts mechanical energy into electrical energy also using a magnetic field linkage.

An electromechanical transducer comprises a stator and a rotor. The stator is an assembly, which represents the stationary part of an electromechanical transducer. The rotor is an assembly, which represents the moving and in particular the rotating part of an electromechanical transducer.

In order to realize a magnetic field linkage permanent magnets may be used in particular for a rotor of an electromechanical transducer. In recent years, especially since the introduction of rare-earth magnetic materials, permanent magnet (PM) electromechanical transducers have become popular since they eliminate the need for commutators and brushes, which are commonly used with conventional Direct Current (DC) electromechanical transducer. The absence of an external electrical rotor excitation eliminates losses on the rotor and makes permanent magnet electromechanical transducers more efficient. Further, the brushless design of a PM electromechanical transducer allows conductor coils to be located exclusively in the stationary stator. In this respect it is mentioned that non-PM electromechanical transducers, which are equipped with commutators and brushes, are typically susceptible to significantly higher maintenance costs.

PM electromechanical transducers are also known for their durability, controllability and absence of electrical sparking. Thanks to these advantages PM electromechanical transducers are widely used in many applications such as electric vehicles (electromechanical transducer is a motor) or in power generation systems (electromechanical transducer is a generator) such as for instance a wind turbine.

One technical problem of PM electromechanical transducers is cogging torque. Cogging torque is produced between the rotor and the stator due to a spatial meeting of "sharp edges" of rotor mounted permanent magnets and stator coils when the PM electromechanical transducer is in operation. In a PM electric generator cogging torque is an undesired effect that contributes to a so called "torque ripple" on the electric power output signal of the generator. Another problem of PM transducers is the mechanical "radial force/pressure ripple". Both effects lead to unwanted vibrations of the PM electric generator, which itself causes troublesome acoustic noise. This holds in particular for PM electric generators, which in particular in wind turbine applications are operated with variable rotational speed. Avoiding or at least reducing acoustic noise and vibrations is a great challenge in the design and/or the operational control of PM electric generators being used for wind turbines.

One approach to reduce acoustic noise and vibrations is to choose an appropriate design for a PM electric generator. For example, torque ripple can be reduced by using an appropriate shaping of magnets. Further, a skewing of the rotor magnets has been proposed (e.g. US 6,867,524 B2). However, it is difficult to minimize both torque ripple and radial force/pressure ripple by using a single design for a PM electromechanical transducer.

Another approach to reduce noise and vibration within a PM electromechanical transducer is to design mechanical parts of the transducer in such a manner that all resonance frequencies, which can be excited by torque and radial force/pressure ripple, are out of the frequency range. However, in case of a variable rotational speed of the PM electromechanical transducer, the frequency range that can be excited by torque ripple and/or radial force/pressure ripple is very wide. Therefore, it is very difficult to avoid vibrations within the whole frequency range of the PM electromechanical transducer.

There may be a need for reducing unwanted vibrations of an electromechanical transducer comprising a rotor being equipped with permanent magnets.

### Summary of the Invention

This need may be met by the subject matter according to the independent claims. Advantageous embodiments of the present invention are described by the dependent claims.

According to a first aspect of the invention there is described a method for controlling the operation of an electromechanical transducer, in particular an electric generator for a wind turbine, wherein the electromechanical transducer exhibits a harmonic operational behavior which is given by electric and/or mechanic oscillations having frequency components being different from a fundamental frequency being assigned to a fundamental operational behavior of the electromechanical transducer. The described method comprises (a) observing the strength of a physical quantity being characteristic for the harmonic operational behavior, (b) providing an observation signal being indicative for the observed strength of the physical quantity, (c) comparing the provided observation signal with a reference signal for the strength of the harmonic operational behavior, (d) determining a harmonic control signal in response to the observation signal and in further response to the reference signal, (e) generating a modified drive signal based on the determined harmonic control signal, and (f) supplying the generated modified drive signal to electromagnetic coils of a stator of the electromechanical transducer.

The described control method is based on the idea that acoustic noise and vibrations of and/or within the electromechanical transducer can be reduced by applying a control procedure that is capable of minimizing directly the excitation source of the unwanted harmonic operational behavior. According to the described method this is realized by means of a modified drive signal for energizing the stator coils in such a manner that the excitation source of the harmonic operational behavior can be at least partially eliminated. In order to achieve this, the modified drive signal may in particular comprise an alternating current (AC) component.

In accordance with the described control method the harmonic control signal depends on both (a) the observation signal respectively the observed strength of the harmonic operational behavior and (b) the mentioned reference signal. This may mean that the described control method includes a closed loop regulation of the strength of the harmonic operational behavior respectively a closed loop regulation of the corresponding observation signal being indicative for the observed strength of the harmonic operational behavior. This may provide the advantage that compared to known control procedures the performance of the control procedure described in this document is improved. Specifically, compared to an open loop regulation of the observation signal respectively of the corresponding harmonic operational behavior inaccuracies with regard to a wanted reduction or even a wanted elimination of the harmonic operational behavior of the electromechanical transducer can be significantly reduced.

In this document the term "electromechanical transducer" may denote any machine which is capable of converting mechanical (in particular rotational) energy into electric energy or vice versa. Specifically, the electromechanical transducer may be an electric generator such as a wind turbine electric generator or an electric motor such as an electric drive of an electric vehicle.

The term "fundamental frequency" may particularly denote the frequency of any electric and/or mechanic oscillation of and/or within the electromechanical transducer which frequency is associated with a desired operation of the electromechanical transducer. In this respect the fundamental frequency may be in particular the rotational frequency of the rotor of the electromechanical transducer. Further, with respect to the electric behavior of the electromechanical transducer the fundamental frequency may be the frequency of the electric signal which (a) in case of a generator application is produced by the electromechanical transducer or (b) in case of a motor application is driving the electromechanical transducer. Typically, there is a fixed integer relationship between the "electric fundamental frequency" and the "mechanic fundamental frequency" of the electromechanical transducer. Of course, if the electromechanical transducer is the generator of a variable speed wind turbine, which is a preferred application area for control method described in this document, the fundamental frequency will vary over time.

The term "fundamental operational behavior" may particularly denote any mechanic and/or electric oscillation of or within the electromechanical transducer, which has a frequency corresponding to the above described fundamental frequency. Normally, the fundamental operational behavior of a wind turbine electric generator is to produce DC (0Hz) torque/power. But the electrical fundamental frequency is varying with rotor speed with range 8-18Hz.

Observing the strength of a physical quantity being characteristic for the harmonic operational behavior my in particular involve a direct measurement of the harmonic operational behavior. The direct measurement may be carried out for instance with the help of a direct sensor such as an accelerator meter, a microphone and/or a flux sensor and, if applicable an appropriate signal processing, in order to achieve the observation signal. In this case the observation signal may also be denominated a measurement signal.

The "modified drive signal" may be any electric signal which is used for electrically energizing the stator coils of the electromechanical transducer. Depending on the specific electric circuitry for driving the stator coils the modified drive signal may be a voltage signal or a current signal.

Preferably, the modified drive signal may include modified voltage drive signals Vd and Vq for stator coils of the electromechanical transducer. In a controller controlling the described method these modified voltage drive signals Vd and Vq may be DC components in a d-q rotating frame. Physically, the electrical signal added to the stator coils is fundamentally an AC signal in the a-b-c natural frame.

In this respect it is mentioned that unless other notified all voltage and current signals being used for the control method and the control system described in this document are signals in a synchronized rotating d-q reference frame.

According to an embodiment of the invention the harmonic operational behavior is based on torque ripple oscillations and/or radial force/pressure ripple oscillations. This may provide the advantage that with the described control method from a practical point of view the most relevant excitation sources for a harmonic operational behavior of an electromechanical transducer comprising a rotor with permanent magnets (PM) can be minimized.

Generally speaking, the harmonic control signal may be determinant for a harmonic current, which is injected to the stator coils of the electromechanical transducer and which is responsible for minimizing torque ripple oscillations and/or radial force/pressure ripple oscillation of the electromechanical transducer. Thereby, unwanted noise and vibrations cause by these oscillations can be reduced.

In particular in case of a wind turbine application the injection of the harmonic current to the stator coils may be accomplished by means of a frequency converter. This may provide the advantage that no additional hardware cost will be needed for realizing the described control method. Moreover, there is no need to change the already available hardware design. It is mentioned that the amount of harmonic current, which is typically needed for performing the described control procedure, is not very high, an additional electric loss of the electric generator is also small and ignorable.

In this respect it is mentioned that a frequency converter of a wind turbine is a commonly known electric power device, which is normally used for adapting the AC frequency and the voltage of the electric power signal provided by the electric generator of the wind turbine to the given AC frequency and the given voltage of the power grid. A frequency converter, which is sometimes also referred to as a power converter, typically includes a generator bridge, which in normal operation operates as an active rectifier in order to supply power to a direct current (DC) link. The generator bridge can have any suitable topology with a series of semiconductor power switching devices fully controlled and regulated using a pulse width modulation (PWM) strategy. A usual frequency converter typically includes also a network bridge, which converts this DC power from the DC link to an AC power, which in voltage, frequency and phase angle is matched to the power grid.

According to a further embodiment of the invention observing the strength of the harmonic operational behavior comprises using at least one of a measurement value, an estimated value and an available system value of observables being indicative for the torque ripple oscillations and/or for the radial force/pressure ripple oscillations of the electromechanical transducer.

The observables may comprise the strength of the current being actually generated by the electromechanical transducer (in case the electromechanical transducer is an electric generator) or the current being actually consumed by the electromechanical transducer (in case the electromechanical transducer is an electric motor).

The observables may further comprise the actual voltages being applied to the electromagnetic coils of the stator.

Further, the observables may comprise an actual angle between a direct-quadrature (d-q) rotating reference frame of the rotor of the electromechanical transducer and another reference frame (e.g. of the stator of the electromechanical transducer). In this respect it is mentioned that a d-q transformation between the another reference frame of the stator and the rotating reference frame of the rotor is a common mathematical transformation being often used to simplify the analysis of three-phase electric circuits. In the case of balanced three-phase electric circuits, application of the d-q transformation reduces the three AC quantities to two DC quantities. As a consequence, simplified calculations can be carried out on these imaginary DC quantities before performing the inverse transform to recover the actual three-phase AC results.

It is mentioned that in accordance with another embodiment of the invention the strength of the harmonic operational behavior can also be determined by directly sensing the torque ripple oscillations and/or the radial force/pressure ripple oscillations of the electromechanical transducer. Alternatively or in combination, results of measurements of vibrations, noise and/or magnetic flux can be used for determining the strength of the harmonic operational behavior.

According to a further embodiment of the invention comparing the provided observation signal with the reference signal for the strength of the harmonic operational behavior comprises evaluating a difference between (a) the strength of the provided observation signal and (b) the strength of the reference signal for the strength of the harmonic operational behavior. This may provide the advantage that the comparison between the observation signal and the reference signal can be realized easily by employing e.g. an appropriate subtraction unit.

According to a further embodiment of the invention determining the harmonic control signal comprises processing the observation signal, the reference signal or a combination of the observation signal and the reference signal. This may provide the advantage that the signal quality of the harmonic control signal can be improved such that a high reliability of the described control procedure can be guaranteed.

According to a further embodiment of the invention processing the observation signal, the reference signal or a combination of the observation signal and the reference signal comprises filtering and/or amplifying the observation signal, the reference signal or a combination of the observation signal and the reference signal. Appropriate filters may be part of the controller.

The described filtering procedure may be realized for instance with a band pass filter or with a high pass filter. The described amplification procedure may be carried out with any appropriate gain, which can be more or less than 1.

According to a further embodiment of the invention the method further comprises (a) observing the strength of a further physical quantity being characteristic for the harmonic operational behavior, (b) providing a further observation signal being indicative for the observed strength of the further physical quantity and (c) comparing the provided further observation signal with a further reference signal for the strength of the harmonic operational behavior. Thereby, the harmonic control signal is determined further in response to the further observation signal and in further response to the further reference signal. This may provide the advantage that simultaneously two different types of harmonic operational behavior can be taken into account for the described control procedure.

As has already been mentioned above also observing the strength of the further physical quantity may in particular involve a direct measurement of the harmonic operational behavior.

The two different types of harmonic operational behavior may be in particular unwanted torque ripple oscillations and unwanted radial force/pressure ripple oscillations. This may provide the advantage that from a practical point of view the most relevant excitation sources for a harmonic operational behavior of an electromechanical transducer comprising a rotor with PM can be minimized simultaneously.

It is pointed out that all processing steps which are carried out with the observation signal and/or the reference signal can also be carried out with the further observation signal and/or the further reference signal.

According to a further embodiment of the invention generating the modified drive signal comprises adding an AC drive signal being associated with the harmonic operational behavior of the electromechanical transducer to a DC drive signal being associated with the fundamental operational behavior of the electromechanical transducer.

This may mean that the mentioned modified drive signal is the sum of the AC drive signal and the DC drive signal. In this respect the DC drive signal can be understood as to represent the optimal drive signal for the stator coils in case of a complete absence of any harmonic operational behavior of the electromechanical transducer. Accordingly, the AC drive signal may be understood as a compensational portion of the modified drive signal, which compensational portion is configured such that the above mentioned sources of harmonic behavior at or within the electromechanical transducer will be eliminated at least partially.

According to a further embodiment of the invention (a) the DC drive signal is generated by a DC controller, which is driven by a fundamental controller for controlling a fundamental drive signal for the electromagnetic coils of the stator, wherein the fundamental drive signal is associated exclusively with the fundamental operational behavior of the electromechanical transducer and (b) the AC drive signal is generated by an AC controller, which is operated as a function of the determined harmonic control signal being indicative for the harmonic operational behavior of the electromechanical transducer.

In this respect it is mentioned that the DC controller and the fundamental controller may be realized by means of two different control units or alternatively by means of a common control unit.

According to a further embodiment of the invention the modified drive signal is generated by a general control unit as a function of (a) the determined harmonic control signal and (b) a fundamental control signal being generated by a fundamental controller for controlling a fundamental drive signal for the electromagnetic coils of the stator, wherein the fundamental drive signal is associated exclusively with the fundamental operational behavior of the electromechanical transducer.

Preferably, the determined harmonic control signal and the fundamental control signal are simply added and a resulting total control signal is processed by the general control unit.

According to a further embodiment of the invention the modified drive signal is generated as a further function of a current being actually generated by the electromechanical transducer (in case the electromechanical transducer is an electric generator) or being actually consumed by the electromechanical transducer (in case the electromechanical transducer is an electric motor). This may provide the advantage that the modified drive signal can be generated with a high accuracy. As a consequence, the excitation source and in particular the above mentioned torque ripple oscillations and/or the above mentioned radial force/pressure ripple oscillations causing the unwanted harmonic operational behavior of the electromechanical transducer can eliminated to a large extend.

According to a further embodiment of the invention the modified drive signal is generated as a function of electric design parameters of the electromechanical transducer.

Taking into account electric design parameters of the electromechanical transducer may provide the advantage that an appropriate harmonic control signal and/or an appropriate modified drive signal for effectively suppressing the harmonic operational behavior of the electromechanical transducer can be determined respectively can be generated in a very effective and easy manner.

The electric design parameters may be for instance the electric resistance and/or the inductance of the electromagnetic coils of the stator of the electromechanical transducer.

It is mentioned that the AC drive signal and/or the modified drive signal, which comprises as a component the AC drive signal, could also be generated by applying a so called iterative learning controller (ILC) and/or repetitive controller (RC). An ILC and/or RC has the capability to track periodical reference for the AC drive signal and/or for the modified drive signal without using an accurate model.

It is further mentioned that most of the above described processing steps and in particular the processing steps which yield for instance the harmonic control signal, the modified drive signal, the AC drive signal and the DC drive signal may be carried out within the above mentioned rotating reference frame of the rotor. As a consequence, all the steps given above may be carried out separately for both components (d-component and d-component) of the rotating frame.

According to a further aspect of the invention there is described a control system for controlling the operation of an electromechanical transducer, in particular an electric generator of a wind turbine, wherein the electromechanical transducer exhibits a harmonic operational behavior which is given by electric and/or mechanic oscillations having frequency components being different from a fundamental frequency being assigned to a fundamental operational behavior of the electromechanical transducer. The described control system comprises (a) an observation unit (al) for observing the strength of a physical quantity being characteristic for the harmonic operational behavior and (a2) for providing an observation signal being indicative for the observed strength of the physical quantity, (b) a control unit (bl) for comparing the provided observation signal with a reference signal for the strength of the harmonic operational behavior and (b2) for determining a harmonic control signal in response to the observation signal and in further response to the reference signal, (c) a generating unit for generating a modified drive signal based on the determined harmonic control signal and (d) a supplying unit for supplying the generated modified drive signal to electromagnetic coils of a stator of the electromechanical transducer.

Also the described control system is based on the idea that acoustic noise and vibrations of and/or within the electromechanical transducer can be reduced by applying a control procedure that is capable of minimizing directly the excitation source of the harmonic operational behavior.

According to a further aspect of the invention there is provided a computer program for controlling the operation of an electromechanical transducer, in particular an electric generator for a wind turbine. The computer program, when being executed by a data processor, is adapted for controlling and/or for carrying out the above described method for controlling the operation of an electromechanical transducer.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a fundamental controller for controlling (a) a fundamental dc link voltage of a frequency converter and for controlling (b) the generation of a fundamental drive signal for electromagnetic coils of a stator of an electric generator, wherein the fundamental DC drive signal is associated exclusively with the fundamental operational behavior of the electric generator.
- Figure 2: shows a control system comprising a DC current controller and AC current controllers operating in d-q reference frame for generating a modified drive signal for the stator coils of an electric generator, wherein the modified drive signal is configured for reducing an unwanted harmonic operational behavior of the electric generator.
- Figure 3: shows a control system comprising general current controllers operating in d-q reference frame for generating a modified drive signal for the stator coils of an electric generator, wherein the modified drive signal is configured for reducing an unwanted harmonic operational behavior of the electric generator.
- Figure 4: shows a calculation unit (ripple controller) for determining a harmonic control signal in response to two observation signals and in further response to two reference signals.
- Figure 5: shows an AC current controller relying on design parameters of an electric generator for generating an AC drive signal for the stator coils of the electric generator.
- Figure 6: shows general current controllers relying on design parameter of an electric generator for generating a modified drive signal for the stator coils of the electric generator.

### Detailed Description

The illustration in the drawing is schematically. It is noted that in different figures, similar or identical elements are provided with the same reference signs or with reference signs, which are different from the corresponding reference signs only within the first digit.

It is mentioned that in the following description all DC or AC signals or signal components refer to a d-q rotating reference frame. Of course, physically all electric signals being applied to the electric generator are AC signals.

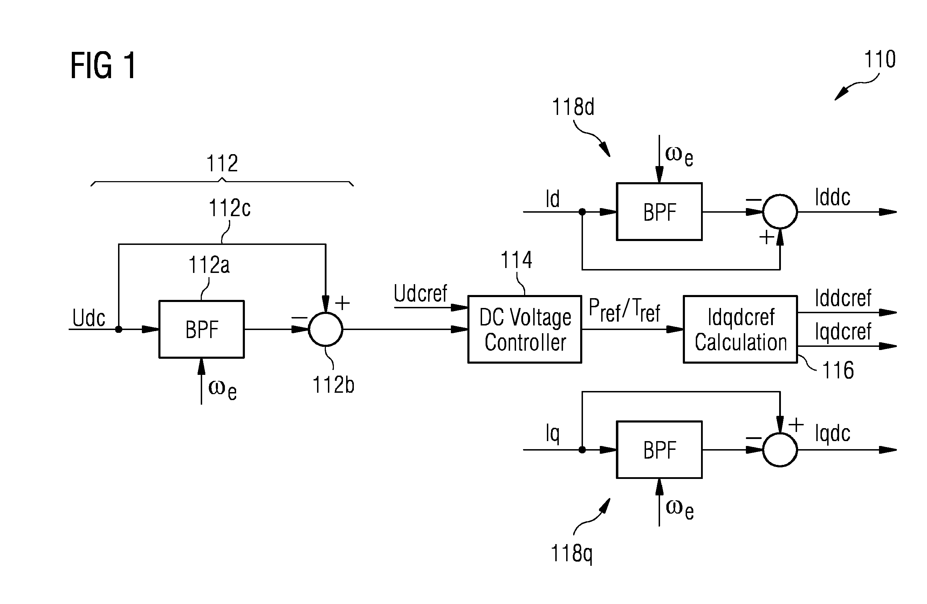

Figure 1 shows a fundamental controller 110 for controlling (a) a fundamental dc link voltage of a frequency converter and for controlling (b) the generation of a fundamental DC drive signal for electromagnetic coils of a stator of an electric generator, wherein the fundamental drive signal is associated exclusively with the fundamental operational behavior of the electric generator. The fundamental controller 110 comprises a band stop filter 112, which receives a signal Udc, which represents a measured DC link voltage of the (not depicted) frequency converter. According to the embodiment described here the band stop filter 112 is realized with an adapted band pass filter 112a being centered based on a frequency ωₑ, which is the actual fundamental electric frequency of the generator, a bypass line 112c and an adder 112b. As can be seen from the labeling of the input terminals of the adder 112b, a signal being provided by the adaptive band pass filter 112a is subtracted from the signal Udc.

It is mentioned that the band pass filter 112a can comprise center frequencies of 6 times ωₑ or 12 times ωₑ or the combination of both. It is further mentioned that the band pass filter 112a could in some application also be replaced by a high pass filter.

According to the embodiment described here the fundamental controller 110 further comprises a DC voltage controller 114, which provides in response (a) to the output from the adder 112b and (b) to a reference voltage Udcref for the DC voltage of the (not depicted) frequency converter as an output signal a generator power reference signal Pref and/or generator torque reference signal Tref. The signal Pref and/or Tref are used as an input signal for a calculation unit 116 for calculating DC current reference signals Iddcref and Iqdcref.

According to another embodiment of the invention which is not explicitly shown in the drawing, the band stop filter 112 is not necessary for the fundamental controller. Instead, the generator power reference signal Pref and/or the generator torque reference signal Tref can be directly received from a wind turbine controller, which in a known manner controls the operation of the respective wind turbine.

Further, the fundamental controller 110 further comprises two further band stop filters 118d and 118q, each of which is realized in the same manner as the band stop filter 112 by an adaptive band pass filter, a bypass line and an adder. As can be seen from Figure 1, the band stop filter 118d receives an input signal Id and the band stop filter 118q receives an input signal Iq. According to the embodiment described here Id and Iq are the actual currents provided by the electric generator in a rotating d-q reference frame. As can be further seen from Figure 1, the band stop filter 118d provides a signal Iddc and the band stop filter 118q provides a signal Iqdc. The signals Iddc and Iqdc are DC drive current signal for the stator coils of the electric generator. As has already been mentioned above, the band pass filter can also be replaced by a high pass filter in some cases.

Generally speaking, in the fundamental controller 110 the feedback signal of both the measured dc link voltage Udc and the measured actual currents Id and Iq provided by the electric generator are filtered by adaptive band-stop filters 112, 118d and 118q so that the fundamental controller 110 is effectively decoupled from harmonic signals having a frequency being different from the fundamental electric frequency ωₑ of the generator.

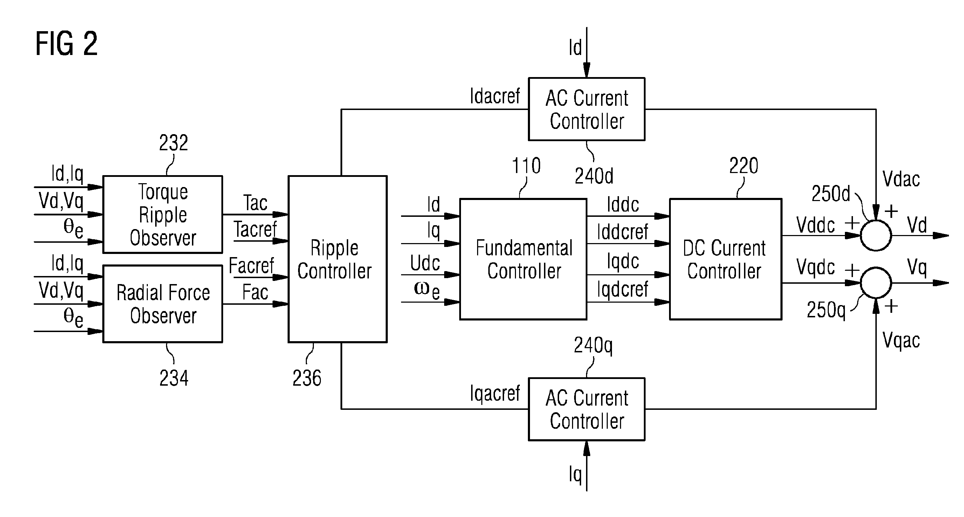

Figure 2 shows a control system 200 comprising a DC current controller 220 and two AC current controllers 240d, 240q for generating modified voltage drive signals Vd and Vq for the stator coils of an electric generator. The modified voltage drive signals 240d, 240q are configured for reducing an unwanted harmonic operational behavior of the electric generator.

As can be seen from Figure 2, the control system 200 comprises a torque ripple observation unit 232 and a radial force observation unit 234. According to the embodiment described here both the torque ripple observation unit 232 and the radial force observation unit 234 receive at least the following input signals: (a) the actual current Id and Iq provided by the electric generator, (b) the actual voltage drive signal Vd and Vq applied to the stator coils of the electric generator and (c) the actual angle θₑ between the rotating reference frame of the rotor and another reference frame (e.g. of the stator of the electric generator). In accordance with the embodiment of the invention described here the actual voltage drive signal Vd and Vq is a modified voltage drive signal, which is provided at the output of the control system 200.

It is mentioned that according to the embodiment described here the actual currents Id and Iq in the rotating d-q reference frame are calculated from measured stator currents. Further, the actual voltage drive signals Vd and Vq are not measured. They are available system variables. The actual angle θₑ between the rotating reference frame of the rotor and another reference frame can be measured and/or estimated.

The torque ripple observation unit 232 provides a torque ripple signal Tac being indicative for the actual torque ripple oscillations of the electric generator. The radial force observation unit 234 provides a radial force signal Fac being indicative for the actual radial force oscillations of the electric generator. Based on the signals Tac and Fac and on corresponding reference signals, a reference signal Tacref for the torque ripple signal and a reference signal Facref for the radial force signal, a calculation unit 236 calculates AC current reference signals Idacref and Iqacref, which is this document are also denominated as harmonic control signals. In the following the calculation unit 236, which will be described below in more detail, is also denominated ripple controller.

According to the embodiment described here the reference signals Tacref and Facref are specified values. In most of the cases, the reference signals Tacref and Facref are 0 in order to provide minimum force ripple so that noise and vibration can be minimized. However, in some special cases, it would be possible to use other values for the level of at least one of these two reference signals.

It is pointed out that with the reference signals Tacref and Facref a closed loop scheme for the torque ripple and for the radial force, respectively, is provided.

As can be further seen from Figure 2, the AC current reference signal Idacref is provided to the AC current controller 240d, which in consideration of the actual current Id provided by the electric generator generates an AC drive signal Vdac. Correspondingly, the AC current reference signal Iqacref is provided to the AC current controller 240q, which in consideration of the actual current Iq provided by the electric generator generates an AC drive signal Vqac. In this respect it is pointed out that the generator currents in the a-b-c reference frame is measured, then they are transformed to d-q reference frame in order to obtain Id and Iq.

The control system 200 further comprises two adders 250d and 250q. As can be seen from Figure 2, the adder 250d receives a DC drive signal Vddc from the DC current controller 220, which is added to the AC drive signal Vdac yielding the modified voltage drive signal Vd, which is fed to the stator coils of the electric generator. Correspondingly, the adder 250q receives a DC drive signal Vqdc from the DC current controller 220, which is added to the AC drive signal Vqac yielding the modified voltage drive signal Vq, which is also fed to the stator coils of the electric generator.

Descriptive speaking: Based on an on-line estimation of torque ripple and/or radial force/pressure ripples, an optimal compensation harmonic current Idacref, Iqacref in the d-q rotating frame is calculated on line. The additional AC current controller 240d, 240q for this harmonic current Idacref, Iqacref in the d-q rotating frame is added in order to ensure that the harmonic current is in fact injected to the stator coils via the modified voltage drive signal Vd, Vq.

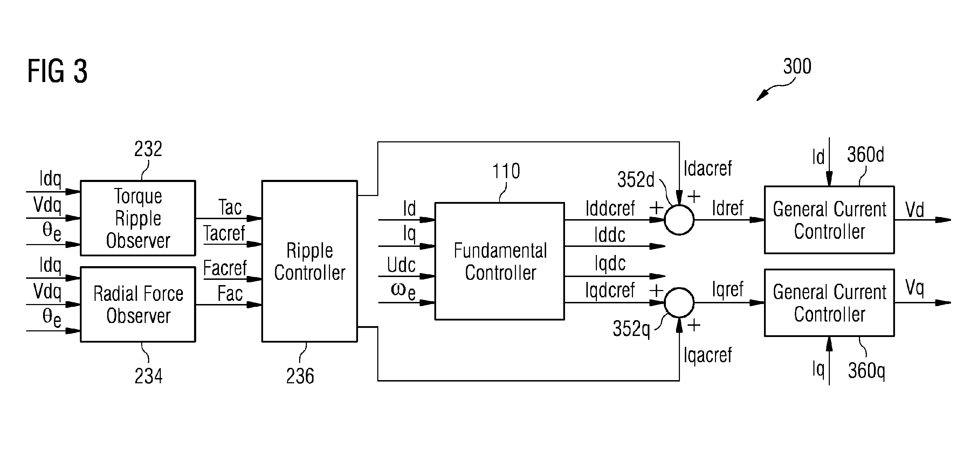

Figure 3 shows a control system 300, which differs from the control system 200 illustrated in Figure 2 in that the DC current controller 220 and the AC current controller 240d, 240q are replaced in the control system 300 by general current controllers 360d, 360q. As can be seen from Figure 3, the adding procedure is carried out on the level of the reference signals Iddcref and Iqdcref and the reference signals Idacref and Iqacref, respectively. Correspondingly, adder 352d and 352q being located upstream with respect to the general current controller 360d, 360q are used.

It is mentioned that by contrast to the control system 200 in the embodiment described here the signals Iddc and Iqdc, which are provided by the fundamental controller 100, are not used.

Descriptive speaking: In the control system 300 harmonic current reference signals Idacref, Iqacref are added together with the respective fundamental current reference signals Iddcref, Iqdcref so that a total current reference signal Idref, Iqref in the rotating d-q reference frame can be achieved. The general current controller 360d, 360q is used, in consideration of the actual current Id, Iq provided by the electric generator, to force the stator coil current to follow the total current reference signals Idref and Iqref.

At this point it is mentioned that in this document the total current reference signals Idref and Iqref are also denominated as total control signals.

It is mentioned that in the embodiments shown in Figure 2 and Figure 3, it may also be possible to use a direct sensor such as an accelerator meter, a microphone and/or a flux sensor and, if applicable an appropriate signal processing, in order to achieve the signals Tac and Fac. This means that such direct sensor(s) and, if appropriate signal processing circuits, can be used to replace the torque ripple observer 232 and/or the radial force observer 234.

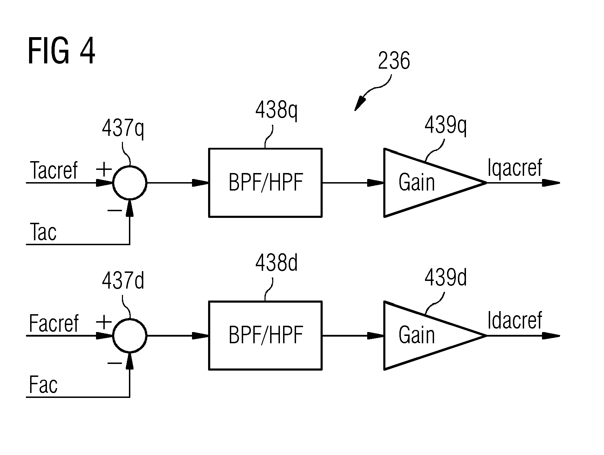

Figure 4 shows the calculation unit (ripple controller) 236, which is used for the control system 200, 300, in more detail. The ripple controller 236 comprises an adder 437d and an adder 437q. As can be seen from the labeling of the input terminals of the adder 437d, the torque ripple signal Tac (being provided by the torque ripple observation unit 232) is subtracted from the reference signal Tacref. Accordingly, the radial force signal Fac (being provided by the radial force observation unit 234) is subtracted from the reference signal Facref.

Further, the ripple controller 236 comprises two filter 438q and 438d, wherein the filter 438q is used for filtering the output signal of the adder 437q and the filter 438d is used for filtering the output signal of the adder 437d. The filter 438q and/or the filter 438d may be a band pass filter (BPF) or a high pass filter (HPF). As can be seen from Figure 4, the output of the filter 438q is amplified by an amplifier 439q and the output of the filter 438d is amplified by an amplifier 439d. The output signal of the amplifier 439q is the harmonic control signal Iqacref. The output signal of the amplifier 439d is the harmonic control signal Idacref.

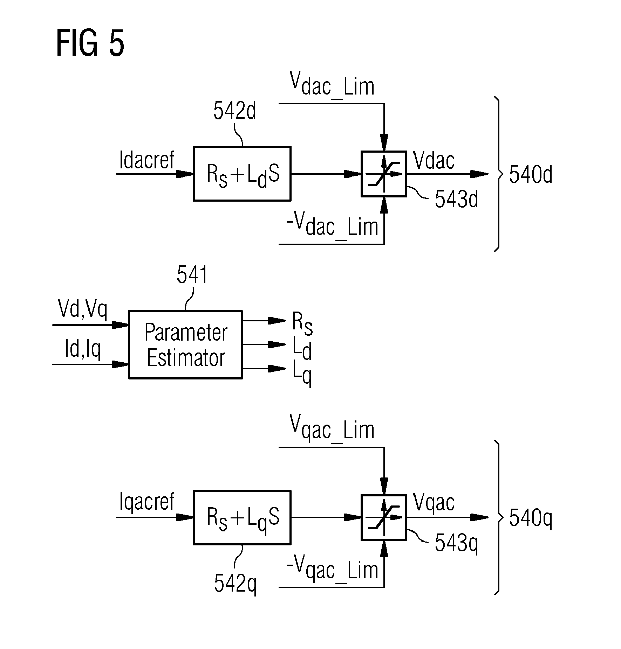

Figure 5 shows an AC current controller 540d, 540q relying on design parameters of an electric generator for generating an AC drive signal for the stator coils of the electric generator. The AC current controller 540d, 540q can be used for instance for the AC current controller illustrated in Figure 2.

The operation of the AC current controller 540d, 540q relies on design parameters of the respective electric generator, which according to the embodiment described here are determined by a parameter estimating unit 541. As can be seen from Figure 5, as a function of (a) the modified voltage drive signal Vd, Vq for the stator coils of electric generator and of (b) the actual current Id, Iq provided by the electric generator, the parameter estimating unit 541 estimates the generator design parameter Rₛ, which is the (ohmic) resistance of the stator coils, and the generator design parameters L_{d}, L_{q}, which are the inductances of the stator coils in the d-q rotating frame. The described on-line estimation of the generator design parameters can increase the accuracy of the AC controller 540d, 540q.

It is mentioned that the described parameter estimating unit is optional for the operation of the AC current controller 540d, 540q. There may also be other ways to provide the AC current controller 540d, 540q with the necessary values of the generator parameters Rₛ and L_{d}, L_{q}.

The AC current controller 540d comprises a control unit 542d, which provides, in response to the AC current reference signal Idacref (already mentioned above) and in response to the time derivative S of the stator current and further in consideration of the design parameters Rₛ and L_{d}, an output voltage signal for driving the stator coils. In order to avoid any overdrive of the stator coils the amplitude of this output voltage signal is limited by a limiting unit 543d within a voltage range extending from -V_{dac_Lim} to + V_{dac_Lim}. The output signal from the limiting unit 543d is the AC drive signal Vdac, which has already been explained above.

Correspondingly, a control unit 542q of the AC current controller 540q provides an output voltage signal in response to the AC current reference signal Idacref (already mentioned above) and in response to the time derivative S of the stator current and further in consideration of the design parameters Rₛ and L_{q}. This output voltage signal is limited by a limiting unit 543q within a voltage range extending from -V_{qac}_Lim to + V_{qac_Lim}. The output signal from the limiting unit 543q is the AC drive signal Vqac.

It is mentioned that also are other types of AC current controllers, for example, resonance controller, could be used for regulating the harmonic currents.

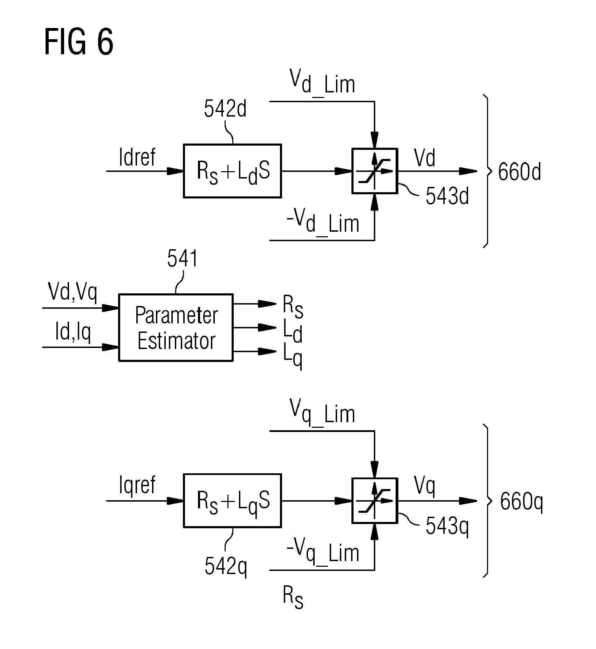

Figure 6 shows a general current controller 660d, 660q relying on the design parameter Rₛ and L_{d}, L_{q} of the respective electric generator. The general current controller 660d, 660q can be used for instance in the control system 300 (illustrated in Figure 3).

The output signals of the general current controller 660d, 660q are the modified drive signals Vd and Vq, respectively, for driving the stator coils of the electric generator. The structure of the general current controller 660d, 660q is the same as the structure of the AC current controller 540d, 540q illustrated in Figure 5. The only difference is the type of the input signals being employed. Specifically, the general current controller 660d, 660q uses the above described total current reference signals / total control signals Idref and Iqref as input signals. Due to the strong similarities between the general current controller 660d, 660q and the AC current controller 540d, 540q illustrated in Figure 5 (same structure, only different input signals) and for the sake of conciseness of this document no further details are presented here. Instead, reference is made to the above presented description of the AC current controller 540d, 540q.

Descriptive speaking: The general current controller 660d, 660q uses the generator design parameters Rₛ and L_{d}, L_{q} in order to calculate the total voltage that is needed to generate corresponding current in the d-q reference frame. An on-line estimation of generator design parameters Rₛ and L_{d}, L_{q} can increase the accuracy of the controller.

It is mentioned that also other types of general current controllers, for example, deadbeat controller and sliding mode controller, could be used for regulating the currents.

The above elucidated embodiments of the invention presented in this document may in particular provide the following advantages:
(A) Acoustic noise and vibrations of an electromechanical transducer can be significantly reduced.
(B) Torque ripples in particular of an output of an electric generator can be minimized.
(C) Radial force/pressure ripple of an electromechanical transducer can be minimized.
(D) An implementation of the invention into actual available electromechanical transducers can be realized by means of software. Therefore, there are no or only a negligible additional costs for realizing the invention in connection with available electromechanical transducers.
(E) Due to typically comparatively small amplitudes of harmonic currents an implementation of the invention has very low additional energy losses.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for controlling the operation of an electromechanical transducer, in particular an electric generator for a wind turbine, wherein the electromechanical transducer exhibits a harmonic operational behavior which is given by electric and/or mechanic oscillations having frequency components being different from a fundamental frequency being assigned to a fundamental operational behavior of the electromechanical transducer, the method comprising
Observing the strength of a physical quantity being characteristic for the harmonic operational behavior,
providing an observation signal (Tac, Fac) being indicative for the observed strength of the physical quantity,
comparing the provided observation signal (Tac, Fac) with a reference signal (Tacref, Facref) for the strength of the harmonic operational behavior,
determining a harmonic control signal (Idacref, Iqacref) in response to the observation signal (Tac, Fac) and in further response to the reference signal (Tacref, Facref),
generating a modified drive signal (Vd, Vq) based on the determined harmonic control signal (Idacref, Iqacref), and
supplying the generated modified drive signal (Vd, Vq) to electromagnetic coils of a stator of the electromechanical transducer.

2. The method as set forth in the preceding claim, wherein the harmonic operational behavior is based on
torque ripple oscillations and/or
radial force/pressure ripple oscillations.

3. The method as set forth in the preceding claim, wherein observing the strength of the harmonic operational behavior comprises
using at least one of a measurement value (θₑ), an estimated value and an available system value (Id, Iq, Vd, Vq) of observables being indicative for the torque ripple oscillations and/or for the radial force/pressure ripple oscillations of the electromechanical transducer.

4. The method as set forth in any one of the preceding claims, wherein
comparing the provided observation signal (Tac, Fac) with the reference signal (Tacref, Facref) for the strength of the harmonic operational behavior comprises
evaluating a difference between (a) the strength of the provided observation signal (Tac, Fac) and (b) the strength of the reference signal (Tacref, Facref) for the strength of the harmonic operational behavior.

5. The method as set forth in any one of the preceding claims, wherein
determining the harmonic control signal (Idacref, Iqacref) comprises
processing the observation signal (Tac, Fac), the reference signal (Tacref, Facref) or a combination of the observation signal (Tac, Fac) and the reference signal (Tacref, Facref).

6. The method as set forth in the preceding claim, wherein
processing the observation signal (Tac, Fac), the reference signal (Tacref, Facref) or a combination of the observation signal (Tac, Fac) and the reference signal (Tacref, Facref) comprises
filtering and/or amplifying the observation signal (Tac, Fac), the reference signal (Tacref, Facref) or a combination of the observation signal (Tac, Fac) and the reference signal (Tacref, Facref).

7. The method as set forth in any one of the preceding claims, further comprising
observing the strength of a further physical quantity being characteristic for the harmonic operational behavior,
providing a further observation signal (Fac, Tac) being indicative for the observed strength of the further physical quantity and
comparing the provided further observation signal (Fac, Tac) with a further reference signal (Facref, Tacref) for the strength of the harmonic operational behavior,
wherein the harmonic control signal (Idacref, Iqacref) is determined further in response to the further observation signal (Fac, Tac) and in further response to the further reference signal (Facref, Tacref).

8. The method as set forth in any one of the preceding claims 1 to 7, wherein
generating the modified drive signal (Vd, Vq) comprises adding an AC drive signal (Vdac, Vqac) being associated with the harmonic operational behavior of the electromechanical transducer to a DC drive signal (Vddc, Vqdc) being associated with the fundamental operational behavior of the electromechanical transducer.

9. The method as set forth in the preceding claim, wherein the DC drive signal (Vddc, Vqdc) is generated by a DC controller (220), which is driven by a fundamental controller (110) for controlling a fundamental drive signal for the electromagnetic coils of the stator, wherein the fundamental drive signal is associated exclusively with the fundamental operational behavior of the electromechanical transducer and the AC drive signal (Vdac, Vqac) is generated by an AC controller (240d, 240q), which is operated as a function of the determined harmonic control signal (Idacref, Iqacref) being indicative for the harmonic operational behavior of the electromechanical transducer.

10. The method as set forth in any one of the preceding claims 1 to 7, wherein
the modified drive signal (Vd, Vq) is generated by a general control unit (360d, 360q) as a function of
(a) the determined harmonic control signal (Idacref, Iqacref) and
(b) a fundamental control signal (Iddcref, Iqdcref) being generated by a fundamental controller (110) for controlling a fundamental drive signal for the electromagnetic coils of the stator, wherein the fundamental drive signal is associated exclusively with the fundamental operational behavior of the electromechanical transducer.

11. The method as set forth in the preceding claim, wherein the modified drive signal (Vd, Vq) is generated as a further function of a current (Id, Iq) being actually generated by the electromechanical transducer or being actually consumed by the electromechanical transducer.

12. The method as set forth in any one of the preceding claims, wherein
the modified drive signal (Vd, Vq) is generated as a function of electric design parameters (Rₛ, L_{d}, L_{q}) of the electromechanical transducer.

13. A control system for controlling the operation of an electromechanical transducer, in particular an electric generator of a wind turbine, wherein the electromechanical transducer exhibits a harmonic operational behavior which is given by electric and/or mechanic oscillations having frequency components being different from a fundamental frequency being assigned to a fundamental operational behavior of the electromechanical transducer, the control system (200, 300) comprising
an observation unit(232, 234)
for observing the strength of a physical quantity being characteristic for the harmonic operational behavior and
for providing an observation signal (Tac, Fac) being indicative for the observed strength of the physical quantity,
a control unit (236)
for comparing the provided observation signal (Tac, Fac) with a reference signal (Tacref, Facref) for the strength of the harmonic operational behavior and
for determining a harmonic control signal (Idacref, Iqacref) in response to the observation signal (Tac, Fac) and
in further response to the reference signal (Tacref, Facref),
a generating unit (220, 240d, 240q, 250d, 250q, 360d, 360q) for generating a modified drive signal (Vd, Vq) based on the determined harmonic control signal (Idacref, Iqacref) and
a supplying unit for supplying the generated modified drive signal (Vd, Vq) to electromagnetic coils of a stator of the electromechanical transducer.

14. A computer program for controlling the operation of an electromechanical transducer, in particular an electric generator for a wind turbine, the computer program, when being executed by a data processor, is adapted for controlling and/or for carrying out the method as set forth in any one of the claims 1 to 12.
